# EUROPÄISCHE PATENTANMELDUNG

(11) **EP 0 595 049 A1**
(43) Veröffentlichungstag der Anmeldung: **04.05.1994**
(21) Anmeldenummer: 93115766.3
(22) Anmeldetag: 30.09.1993
(51) Int. Cl.: H04N 7/14

(54) **Teilnehmergerät für Bildfernsprechen**

(30) Priorität: 30.10.1992 DE 4236665; 01.04.1993 DE 4310678
(71) Anmelder: Alcatel SEL Aktiengesellschaft, D-70435 Stuttgart (DE)
(72) Erfinder: Heine, Bernhard, D-71229 Leonberg (DE); Garcia-Victoria, Carlos, D-71732 Tamm (DE)
(74) Vertreter: Pohl, Herbert, Dipl.-Ing

(57) **Zusammenfassung**

Es wird ein Teilnehmergerät (1) angegeben, das für Bildfernsprechen und Multimediaanwendung geeignet ist, und das durch Vermeidung von Spiegeln einen sehr kompakten Aufbau gestattet und trotz eines vorhandenen Fehlwinkels dem Partner Parallaxefreiheit vermittelt. Das Teilnehmergerät (1) ist mit anderen Moduleinheiten (48) kombinierbar.

Für das Teilnehmergerät (1) werden verschiedene Ausführungen vorgeschlagen, die bei Verwendung unterschiedlicher Bildschirmgrößen der Bildwiedergabevorrichtung (3) und Objektive unterschiedlicher Brennweiten an der Videokamera (11) die Einhaltung einer Parallaxe von weniger als 6° zwischen der Blicklinie (5) zur Videokamera (11) und der Blickkontaktlinie (4) zum Gesprächspartner (P) auf dem Bildschirm (3') ermöglichen.

## Beschreibung

Die Erfindung betrifft ein Teilnehmergerät für Bildfernsprechen nach dem Oberbegriff des Anspruchs 1.

Ein derartiges Teilnehmergerät ist aus der EP 0 309 341 A1 bekannt. Das Gerät hat zwei durch ein Gelenk verbundene Gehäuse, deren eines die Auflage auf einem Tisch bildet und die Schaltung sowie Bedienelemente enthält, während in dem anderen, hochschwenkbaren ein Monitor und eine Kamera untergebracht sind. Zusammengeklappt bilden beide Gehäuse ein kompaktes, quaderförmiges Gerät. Wird das obere Gehäuse um das an der Hinterkante liegende Gelenk aufgeschwenkt, so blickt ein Benutzer auf den nahe der Oberkante einseitig angeordneten Monitor. Unmittelbar daneben ist die Kamera aus Gründen der Raumersparnis um 90° gedreht eingebaut, so daß die vom Benutzer kommenden Lichtstrahlen durch einen vor das Objektiv gesetzten Spiegel umgelenkt werden müssen. Durch Ändern der Neigung des oberen Gehäuses kann das Gerät auf Personen unterschiedlicher Größe ausgerichtet werden.

Außerdem sind Bildtelefone bekannt, bei denen die Parallaxe zwischen Kamera und Bildwiedergabevorrichtung Null ist, weil deren Strahlengänge mit Hilfe von Spiegeln in Bezug auf einen Benutzer vereinigt sind, z.B. aus der DE 36 00 914 A1. Da jedoch der die Strahlen vereinigende Spiegel ein halbdurchlässiger ist, müssen optische Fehler und Lichtverluste hingenommen werden, die naturgemäß an diesem Spiegel sowohl bei Reflexion als auch für die Transmission eintreten. Außerdem werden bei Verwendung großer Bildschirme, z.B. mit einer Bilddiagonalen von 14 Zoll oder mehr, die Abmessungen der teildurchlässigen Spiegel, die ungefähr denen der Bildschirme entsprechen, groß und der Spiegel überproportional teuer. Dadurch werden auch die Gehäuse entsprechend groß und unhandlich.

Der Erfindung liegt die Aufgabe zugrunde, ein handliches, kompaktes Teilnehmergerät für Bildfernsprechen der eingangs genannten Art zu schaffen, bei dem einerseits Lichtverluste durch halbdurchlässige Spiegel vermieden werden, andererseits der Blickkontakt zwischen Gesprächspartnern nicht durch eine störend große Parallaxe beeinträchtigt wird. Gelöst wird diese Aufgabe durch die im Anspruch 1 angegebenen Merkmale. Vorteilhafte Ausgestaltungen sind den Unteransprüchen zu entnehmen.

Die Erfindung wird an Ausführungsbeispielen beschrieben, deren optisch-geometrische Beziehungen in der Figur 1 der zugehörigen Zeichnungen dargestellt sind. Ausgestaltungen nach der Erfindung sind in den Fig. 2 bis 8 der Zeichnungen veranschaulicht. Es zeigen:
- Fig. 2: eine Seitenansicht einer Ausführung eines Teilnehmergerätes für Bildfernsprechen, teilweise im Schnitt;
- Fig. 3: die Frontansicht und
- Fig. 4: die Rückansicht der Ausführung gemäß Fig. 2;
- Fig. 5: die Seitenansicht einer Ausführung mit schwenkbarem, den Bildschirm enthaltenden Gehäuseteil;
- Fig. 6: eine Seitenansicht einer mit weiteren Moduleinheiten der Kommunikationstechnik versehenen Ausführung eines Teilnehmergerätes;
- Fig. 6a: die gleiche Ansicht wie in Fig. 6, jedoch vor dem Ansetzen einer zusätzlichen Moduleinheit, bestehend aus Handapparat und -auflage;
- Fig. 7: die Frontansicht und
- Fig. 8: die Draufsicht des Teilnehmergerätes nach Fig. 6.

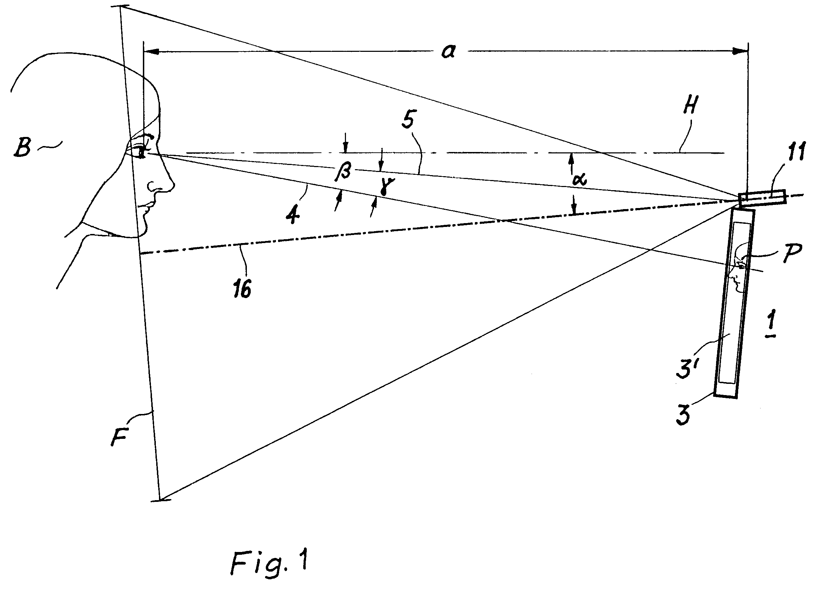

Das Teilnehmergerät ist in der Figur 1 mit 1 bezeichnet. Da die Gestaltung des Gehäuses für die Beschreibung der geometrischen Beziehungen unerheblich ist, ist es nicht eingezeichnet. Videokamera 11 und Bildwiedergabevorrichtung 3 sind schematisch dargestellt.

Die Blickkontaktlinie 4 (Auge-Auge) zwischen einem Benutzer B und einem Gesprächspartner P auf dem Bildschirm der Bildwiedergabevorrichtung 3 ist um einen Winkel γ gegen die Blicklinie 5 zum Objektiv der Videokamera 11 geneigt. Mit der Horizontalen H schließt die Blickkontaktlinie 4 den Winkel β ein. Andererseits ist der Winkel, den die optische Achse 16 der Videokamera 11 mit der Horizontalen H einschließt, mit α bezeichnet. Die Linie F versinnbildlicht die Fokusebene der Videokamera 11, ihre Länge entspricht der Höhe des Bildausschnitts. Die Distanz vom Benutzer B zur Bildebene der Videokamera 11 ist durch den Buchstaben a angegeben.

Die bevorzugte, ergonomisch bequeme Blickrichtung ist um β = 10° zur Horizontalen H geneigt. Sie ist die direkte Linie 4 zwischen den Augen des Benutzers B und den Augen des abgebildeten Gesprächspartners P, und sie repräsentiert damit den angestrebten "Blickkontakt", der ermüdungsfrei auch über längere Zeit zu halten ist. Allein durch die Tatsache, daß das Bild der Bildwiedergabevorrichtung 3 meistens eine "Verkleinerung des Partners" darstellt, kommt bereits eine solche abgesenkte Blickrichtung zustande. Bildtelefongeräte mit besonders kleiner Bildwiedergabevorrichtung sollten daher aus ergonomischer Sicht auf einem Stativ oder auf einer Konsole installiert sein, wobei sich die Videokamera dann etwa in der Höhe des Kinns befindet.

Bei bekannten parallaxefreien Bildtelefonen erreicht der Winkel γ zwischen den Linien 4 und 5, der gelegentlich auch mit "Fehlwinkel" bezeichnet wird, den angestrebten Wert von 0°, weil der Blickwinkel mit der Blickkontaktlinie 4 durch die Verwendung eines halbdurchlässigen Spiegels bei exakter Anpassung identisch sein kann. Testergebnisse haben jedoch gezeigt, daß selbst bei einem Fehlwinkel von 8° immerhin noch 85 % der Versuchspersonen sich angeschaut fühlten.

Als bestgeeigneter Bildausschnitt ist ein Portrait-Ausschnitt "mit weitreichender Möglichkeit zur Persönlichkeitsdarstellung" ermittelt worden. Bei diesem Bildausschnitt erfaßt die Videokamera 11 mit einer Einstellung den gesamten Oberkörperbereich, so daß außer Mimik auch Gestik, also Hand- und Armbewegungen aller Art, als gewünschte, nonverbale Informationen zum Gesprächspartner P übermittelt werden. Dieser Bildausschnitt entspricht bei einer Distanz a = 115 cm einem diagonalen Bildwinkel von etwa 35°; also annähernd einem Objektiv mit einer Brennweite f = 12 mm für derzeit übliche 1/2-Zoll-CCD-Kameras. Die Augenpartie einer einzelnen Person befindet sich dabei etwa in 3/4 der Bildhöhe.

Das Teilnehmergerät 1 ist ein Tischgerät und läßt sich bis zum Rand einer Schreibtischplatte schieben, so daß vor dem Gerät genügend freie Arbeitsfläche verfügbar ist. Dadurch fällt es leicht, für das geplante Gespräch einen geeigneten Platz vor dem Gerät zu finden, damit der Gesprächspartner P ein vorteilhaftes Bild erhält, denn die Videokamera 11 erfaßt die Szene im Bereich von ca. 70 cm x 95 cm. Bei diesem großen Aktionsspielraum kann sich ein Benutzer B nicht nur situationsgerecht bequem einrichten, sondern er kann während des Gesprächs auch einiges durch Gestik verdeutlichen. Selbst bei moderatem Bürolicht, die Kamera stellt sich dazu z.B. auf Blende 2,8 ein, würde noch eine Schärfentiefe von mehr als 45 cm zur Verfügung stehen.

Der angenehm große Bildbereich wird nicht durch einen starken Weitwinkel-Effekt des Objektivs erreicht, sondern vorteilhaft durch ein relativ weit entferntes "Normalobjektiv". Die Videokamera 11 ist etwa in Höhe des Mundes des Benutzers B z.B. leicht um einen Winkel α von 1° unter die Horizontale H geneigt auf das Zentrum des "Portraits" gerichtet und vermeidet dadurch die gefürchtete Froschperspektive. An der Videokamera kann ein gemäßigtes Zoom-Objektiv eingesetzt werden, damit der Benutzer B gelegentlich von einem weiträumig präsentierten auf ein gezielt begrenztes Bild übergehen kann. Mit der vorhandenen Geometrie kann er problemlos auf kleinere Bildwinkel (also Tele-Effekte) einstellen, weil sich Varianten mit kleineren Bildwinkeln (also Portrait-Objektive) leicht realisieren lassen, denn die Geometriegrenzen liegen dann günstiger.

Die Kamera-Position im Teilnehmergerät 1 ist so gewählt, daß die Linie 5 von den Augen zum Objektiv praktisch mit der Linie 4 des "Blickkontakts" zu den Augen des Gesprächspartners P zusammenfällt. Die exakte Abweichung beider Linien beträgt höchstens γ = 5,5° Winkeldifferenz, so daß der "Fehlblick" in den meisten Fällen vom Partner nicht bemerkt wird.

Wird ein 14-Zoll-Monitor als Bildwiedergabevorrichtung 3 verwendet, so sollte er bei gewöhnlichem Video-Standard beim Bildtelefon etwa 110 cm Abstand zum Benutzer auch deswegen haben, damit die Zeilendarstellung nicht störend sichtbar wird.

Das Teilnehmergerät gibt dann ein genügend großes Bild wieder, so daß Mimik und Gestik des Gesprächspartners gut zu sehen sind. So entsteht die Illusion, daß der Partner verkleinert aus einem 22 cm x 28 cm großen Fenster in 110 cm Entfernung schaut. Dies entspricht etwa einem Drittel des Winkels, unter dem sich die Partner sehen, wenn sie einander gegenüber stehen.

Wird für eine andere Ausführung eine Videokamera 11 mit einem Objektiv kürzerer Brennweite, z.B. f = 6 mm verwendet, so muß die Entfernung a auf 85 cm verringert werden, was aus räumlichen Gründen notwendig oder von Vorteil sein kann. Die Neigungswinkel für die Linien 4 und 5 können wie zuvor beibehalten werden, also β = 10° und γ = 5,5°, d.h. die angestrebte Neigung für die Blickkontaktlinie 4 zum Gesprächspartner P auf dem Bildschirm 3' der Bildwiedergabevorrichtung 3 von 10° bleibt erhalten. Da das genannte Objektiv der Videokamera 11 einen wesentlich größeren Bildkreiswinkel hat, nimmt der Bildausschnitt eine Höhe von 70 cm an. Die optische Achse 16 kann etwas mehr geneigt werden als bei der zuvor beschriebenen Ausführung, d.h. der Winkel α kann bis etwa 5° unter der Horizontalen H anwachsen, um das "Portrait" richtig ins Bild zu rücken.

Um das Teilnehmergerät 1 zu verkleinern, kann z.B. für die Bildwiedergabevorrichtung 3 ein 5,7-Zoll-Monitor verwendet werden. Bei Einsatz der gleichen Videokamera 11 wie bei der zuvor beschriebenen Ausführung (f = 6 mm) und gleicher Distanz a von 85 cm gelten auch die gleichen Werte für den Bildausschnitt. Wird auch die Neigung von β = 10° für die Blickkontaktlinie 4 beibehalten, so kann die Parallaxe γ auf 3° verringert werden, da die Videokamera 11 infolge des kleineren Monitors tiefer gesetzt werden kann.

Dieses Teilnehmergerät 1 kann bis auf eine Entfernung von a = 55 cm an den Benutzer B herangerückt werden. Der Bildausschnitt hat dann immer noch eine Höhe von 45 cm, die Neigung der Videokamera 11 muß allerdings auf 3° über der Horizontalen H angehoben werden, um den Benutzer B gut ins Bild zu setzen. Doch sind Bildverzeichnungen bei so geringen Entfernungen nicht zu vermeiden. Außerdem steigt der Neigungswinkel β der Blickkontaktlinie 4 gegen die Horizontale H auf 18° an, der der Blicklinie 5 zum Objektiv der Videokamera 11 auf 13°. Daraus resultiert eine Parallaxe γ = 5°, ein Fehlwinkel, der von den Gesprächspartnern nicht als Abweichung vom Blickkontakt empfunden wird. Durch die Möglichkeit, die Neigung der optischen Achse 16 der Videokamera 11 individuell einstellen zu können, bleibt es dem Benutzer B überlassen, den Abstand a und damit auch die Entfernung des Bildes seinen Bedürfnissen entsprechend zu wählen.

Um das Teilnehmergerät 1 besonders preisgünstig, aber trotzdem für guten Blickkontakt herzurichten, wird für die Bildwiedergabevorrichtung 3 ein 10-Zoll-Bildschirm und eine kostengünstige 1/3-Zoll-Videokamera 11 mit einem Normalobjektiv mit einer Brennweite f = 8,5 mm verwendet. Der Abstand a vom Benutzer B zur Videokamera kann zwischen 70 und 100 cm liegen. Der Neigungswinkel β zwischen der Blickkontaktlinie 4 und der Horizontalen H beträgt dann etwa 18° bis 10°, der der Blicklinie 5 zum Objektiv der Videokamera 11 zwischen 13° und 7°. für die Parallaxe γ ergeben sich Werte zwischen 5° und 3°, die weit unter dem geforderten Wert von 8° liegen. Die Neigung der optischen Achse 16 der Videokamera 11 sollte um α = ± 8° über bzw. unter der Horizontalen H einstellbar sein.

Die Augenhöhe des Benutzers B ist in allen Fällen mit 45 cm über einer Tischfläche angenommen, auf der das Gerät steht, was dem Durchschnitt entspricht.

Wird ein Bildtelefon ausschließlich für einen kleinen Bildausschnitt entsprechend einem Paßbild-Portrait konzipiert, ist also die Kamera mit einem "Normalobjektiv" bzw. einem "kurzen Tele" ausgerüstet, erlauben die kleineren Bildwinkel auch ein weiteres Zusammenrücken der Komponenten. Dadurch können die Abmessungen jeweils noch kleiner werden.

Bei Aufbau von Kamera und Monitor sind, relativiert nach jeweiligem Schwerpunkt, folgende Vorteile nutzbar: Bei stärkerem Licht kann die Schärfentiefe der Kamera durch die Wahl kleinerer Blenden erhöht, bzw. das Licht der Arbeitsplatzbeleuchtung für den Benutzer angenehm reduziert werden. Der Einfluß von Fremdlicht ist wesentlich weniger störend, das Monitorbild hat die bestmögliche Brillanz, ggf. noch verstärkt mit einem üblichen Kontrastfilter. Ist die Kamera mit einer elektronisch integrierten "CCD-Blende" (charged coupled device) ausgestattet, kann trotzdem mit einer zusätzlichen, manuell bedienten Irisblende die Schärfentiefe wunschgemäß voreingestellt werden. Nur bei extrem wenig Licht muß diese Blende manuell oder ferngesteuert bzw. automatisch weiter geöffnet werden.

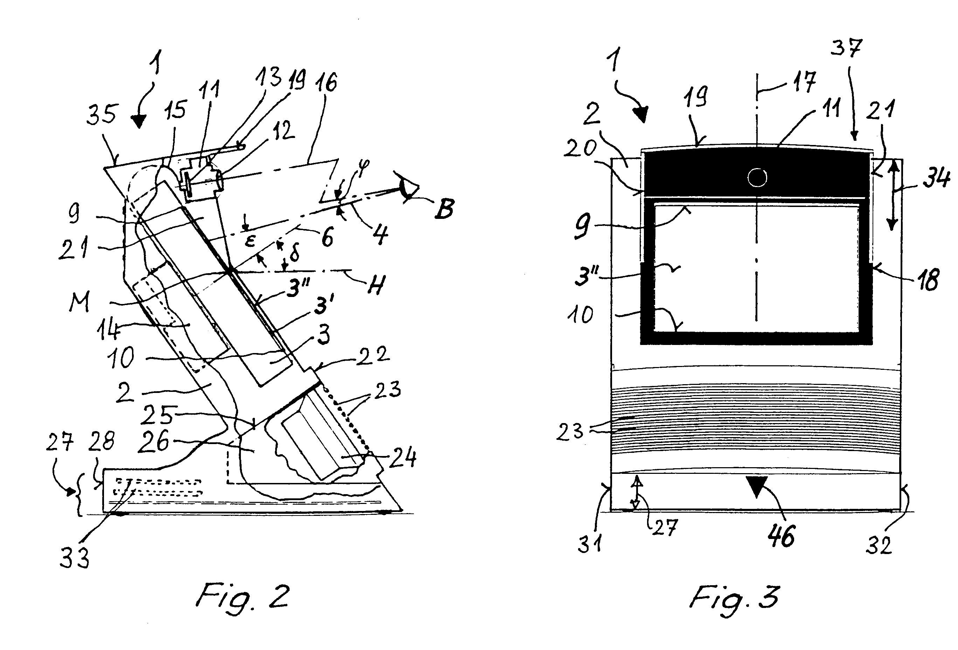

In den Fig. 2 bis 4 ist mit 1 wiederum ein Teilnehmergerät für Bildfernsprechen oder ein Multimediasystem bezeichnet. Es besteht aus einem Gehäuse 2, in dem eine Bildwiedergabevorrichtung 3 mit einem Bildschirm 3' und dessen nach außen weisender Bildfläche 3'' angebracht ist. Dessen Anordnung ist so gewählt, daß seine optische Achse 6 in einem Winkel ε von 5° bis 30°, insbesondere etwa 20° zu der Blickrichtung oder Blickkontaktlinie 4 eines etwa 50 bis 70 cm, insbesondere etwa 60 cm vom Mittelpunkt M der Bildfläche 3'' entfernten Betrachters oder Benutzers B geneigt ist. Der Abstand zwischen Betrachter B und oberer Bildschirmkante 9 der Bildfläche 3'' bzw. des Bildschirms 3' ist also größer als der Abstand zur unteren Bildschirmkante 10. Der Winkel δ zwischen optischer Achse 6 des Bildschirms 3' und der Horizontalen H beträgt etwa 10° bis 40°, insbesondere etwa 30°.

Unmittelbar oberhalb der die obere Bildschirmbegrenzung bildenden oberen Bildschirmkante 9 ist ein Aufnahmeteil einer Videokamera 11, bestehend aus einem Objektiv 12 und einem Bildwandler 13, ganz oder zumindest teilweise vor der Bildfläche 3'' vorgesehen. Dieses bildet mit einer hinter der Bildwiedergabevorrichtung 3 angeordneten Kameraelektronik 14 eine Bildaufnahmevorrichtung. Das Aufnahmeteil der Videokamera 11 und die Kameraelektronik 14 sind über ein Buskabel 15 miteinander verbunden.

Die Videokamera 11 ist derart geneigt angeordnet, daß bei einem Abstand des Betrachters B vom Bildmittelpunkt M von etwa 50 bis 70 cm, insbesondere von etwa 60 cm, die optische Achse 16 des Objektivs 12 zur Blickrichtung 4 des Betrachters B einen Winkel φ von höchstens 6° besitzt. Dieser Winkel φ ist so klein, daß er bei Übertragung des von der Videokamera 11 aufgenommenen Betrachterbildes beim Gesprächspartner am anderen Ende der Kommunikationsstrecke nicht als Fehlwinkel, also nicht als Parallaxefehler wahrgenommen wird. Dazu ist es noch zweckmäßig, daß die Videokamera 11 mittig, also auf der senkrechten Mittellinie 17 des Bildschirms 3' oder nahe dieser angebracht ist. Hierdurch wird ein seitlicher Fehlwinkel praktisch vollkommen vermieden, was zur nicht wahrnehmbaren Parallaxe infolge des senkrechten Fehlwinkels φ wesentlich beiträgt.

Die Videokamera 11 kann auch neben der seitlichen Bildschirmkante 18 möglichst in Augenhöhe des Partners bzw. Partnerbildes, in der Regel der Bereich des oberen Drittels der Bildfläche 3'', angeordnet werden (nicht dargestellt). Hierdurch kann ein seitlicher Fehlwinkel φ' von höchstens 8° erreicht werden, wobei der senkrechte Fehlwinkel φ gleich oder nahezu gleich Null ist. Auch diese Anordnung gewährleistet, daß ein Parallaxefehler vom Partner nicht wahrgenommen wird.

Über der Videokamera 11 ist eine zu deren optischer Achse 16 parallel oder geringfügig, z.B. bis zu 10°, geneigte dachförmige Blende 19 fest oder aufsteckbar oder verstellbar angeordnet. Diese kann sich bis zu seitlichen Blendenabschniten 20, 21 fortsetzen. Blende 19 und Blendenabschnitte 20, 21 können aus einem U-förmigen Blendenteil bestehen, der auch Teil des Gehäuses 2 sein kann. Bei Verwendung einer verstellbaren Blende 19 kann die Anordnung so ausgeführt sein, daß die Neigung und/oder der Überstand der Blende 19 eingestellt werden kann. Gegebenenfalls können auch die Blendenabschnitte 20, 21 getrennt oder zusammen mit der Blende 19 verstellbar angeordnet sein.

Unterhalb des Bildschirms 3' ist das Gehäuse 2 an der Frontseite 22 mit Schallöffnungen 23 versehen. Hinter diesen ist ein Lautsprecher 24 vorgesehen. Zweckmäßig umgibt den Lautsprecher 24 ein zu den Schallöffnungen 23 hin offenes Gehäuseteil 25, das innerhalb des Gehäuses 2 eine geschlossene Lautsprecherbox 26 mit z.B. einem bis drei, insbesondere etwa zwei Litern Volumen bildet. Hierdurch können akustische Erfordernisse und Beeinflussungen zwischen Lautsprecher 24 und anderen Einrichtungsteilen vermieden oder auf ein nicht störendes Maß reduziert werden. Das Gehäuseteil 25 kann ein separates Bauteil sein oder bei der Herstellung des Gehäuses 2 an diesem angeformt werden und einen integralen Bestandteil des Gehäuses 2 bilden.

Im unteren Randbereich 27 des Gehäuses 2 ist auf der Rückseite 28 ein Steckerfeld 29 mit gleichartigen oder ungleichartigen Steckern 30.1, 30.2, 30.3 vorgesehen. Stecker oder ein Steckerfeld können auch, ggf. zusätzlich, auf einer oder beiden Seitenwänden 31, 32 und auch an der Frontseite 22 des Gehäuses 2 vorgesehen sein.

Im unteren Randbereich 27 können an der Rückseite 28 und/oder wenigstens einer Seitenwand 31, 32 Lufteintrittsöffnungen 33 und im oberen Randbereich 34 derselben oder auf der Gehäuseoberseite 35 Luftaustrittsöffnungen 36 vorgesehen sein. Durch Kaminwirkung kann dadurch Kühlluft an der Bildwiedergabevorrichtung 3 und an der Kameraelektronik 14 entlang nach oben gelangen und deren Kühlung bewirken.

Oberhalb der oberen Bildschirmkante 9 ist in der Gehäusewand, der Frontseite 22, oder einer dort eingesetzten Blende eine Schallöffnung 37 vorgesehen, hinter der ein Mikrofon 38 angeordnet ist. Um insbesondere zum Freisprechen eine möglichst geringe Kopplung zwischen Lautsprecher 24 und Mikrofon 38 zu erreichen, sind diese zweckmäßig diagonal zueinander in möglichst großem Abstand voneinander und mechanisch entkoppelt, z.B. durch eine Trennwand oder durch Dämpfungsmaterial voneinander getrennt, angeordnet. Das Mikrofon ist mit seiner Membrane zum Benutzer B hin ausgerichtet. Zweckmäßig ist es in Mundhöhe des Benutzers angebracht oder anbringbar.

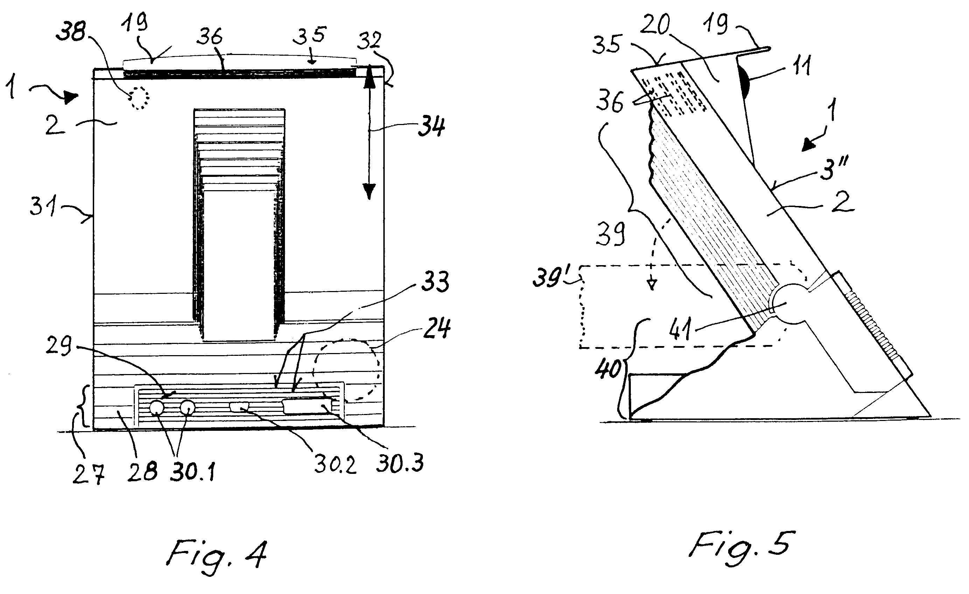

Das Teilnehmergerät 1 kann, wie in Fig. 5 dargestellt, zweiteilig ausgeführt sein. Dabei ist ein oberer Gehäuseteil 39 mit dem Bildschirm 3' und der Videokamera 11 und ggf. auch der Kameraelektronik 14 beweglich an einem unteren Gehäuseteil 40 angebracht. Hierzu ist ein Scharnier 41 oder ein geeignetes Gelenk vorgesehen, so daß der Neigungswinkel δ der optischen Achse 6 des Bildschirms 3' gegenüber der Horizontalen H einstellbar ist. Die Anlenkung kann so gewählt werden, daß der obere Gehäuseteil 39 beispielsweise für Versandzwecke oder zur Einstellung einer Ruhelage etc. in eine in Fig. 5 gestrichelt dargestellte, waagrechte Lage 39' geschwenkt werden kann.

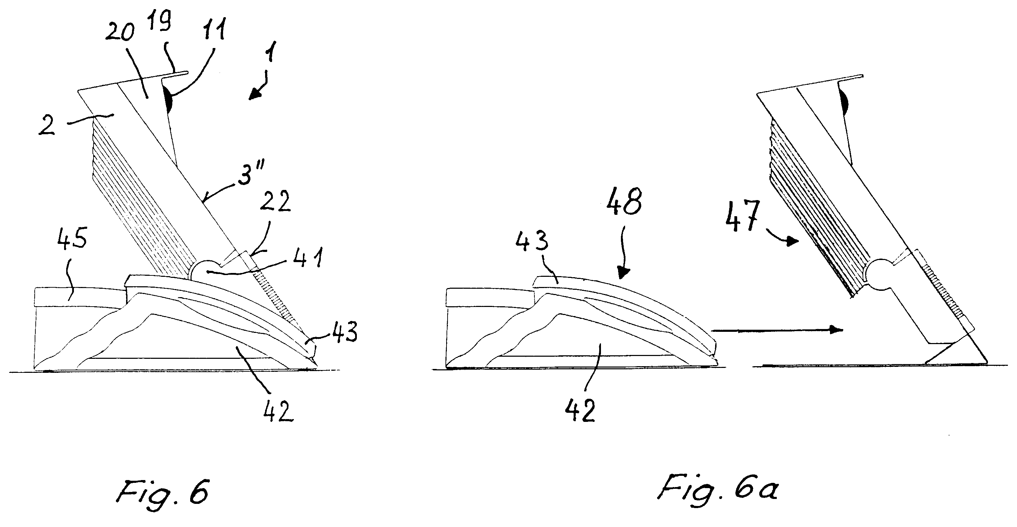

Gemäß einer vorteilhaften Weiterbildung der Erfindung kann, wie in den Fig. 6 bis 8 dargestellt, eine den Bildschirm 3', die Videokamera 11, den Lautsprecher 24, das Mikrofon 38 und die Kameraelektronik 14 enthaltende erste Moduleinheit 47 des Teilnehmergerätes 1 an wenigstens einer Seite, also der Frontseite 22 und/oder der Rückseite 28 und/oder wenigstens einer Seitenwand 31, 32 Befestigungsmittel und/oder Steckverbindungen besitzen, die mit entsprechenden Verbindungsmitteln einer zweiten Moduleinheit 48 zusammenwirken können.

In Fig. 6a sind die beiden Moduleinheiten 47 und 48 in getrenntem Zustand dargestellt. Die zweite Moduleinehit 48 umfaßt beispielsweise elektrische und/oder mechanische Einrichtungen, die der ersten Moduleinheit 47 zugeordnet sein oder zugeordnet werden können und ggf. solche, die auch separat funktionsfähig sind. Die zweite Moduleinheit kann z.B. eine Handapparatauflage 42 mit Handapparat 43, eine Wähltastatur 44, eine Funktionstastatur, ein Netzteil 45, einen Lüfter etc., sowie zusätzliche Telekommunikationseinrichtungen umfassen. Die Moduleinheiten sind so ausgebildet, daß die zweite Moduleinheit 48 gegen eine andere gleiche oder gleichartige oder unterschiedliche austauschbar ist. So können in einfacher Weise Teilnehmergeräte 1 mit gleichen oder unterschiedlichen Merkmalen in einfacher Weise zusammengestellt werden, wobei die Gehäuseabmessungen den Gegebenheiten angepaßt werden und somit jeweils optimal kompakte Funktionseinheiten erstellt oder bestehende in einfacher Weise umgerüstet werden können.

Schließlich kann insbesondere an der Frontseite 22 oder hinter dieser oder auf dieser ein Empfänger 46 für akustische und/oder elektromagnetische Wellen vorgesehen sein. Der Empfänger 46 ist von einem Fernsteuersender beeinflußbar, so daß über diesen Einstellungen an dem Teilnehmergerät 1 oder an zugeordneten Zusatzeinrichtungen vorgenommen werden können.

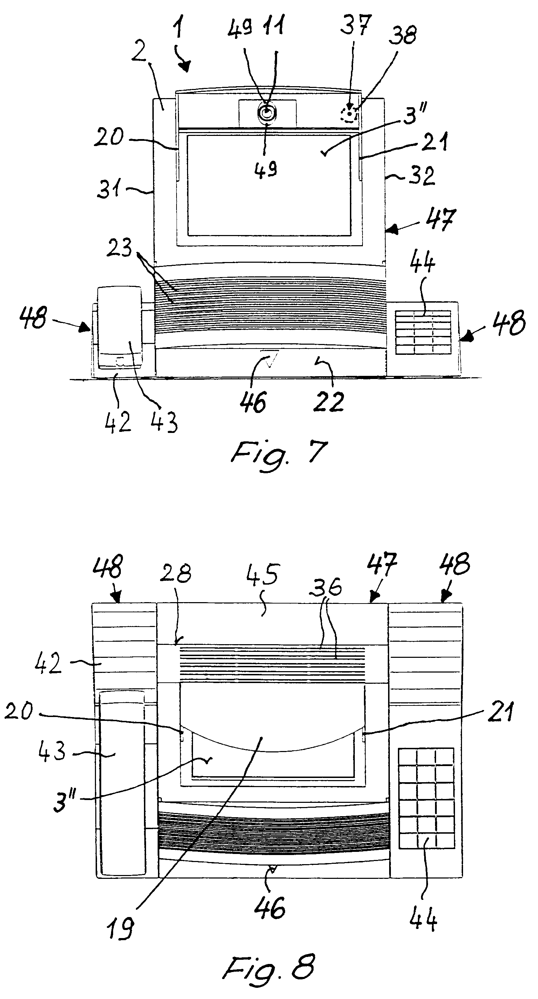

Gemäß einer vorteilhaften Weiterbildung der Erfindung besitzt das Objektiv 12 oder die Videokamera 11 Fokuseinstellmittel, z.B. einen Einstellhebel oder einen Einstellring, der von der Frontseite 22 her von Hand verstellt werden kann. Bei nicht oder nicht weit über die Frontseite 22 bzw. die Bildfläche 3'' überstehendem Objektiv 12 ist, wie in Fig. 7 dargestellt, in der Gehäusewand wenigstens eine z.B. trichterförmige Vertiefung 49 vorgesehen, in der sich das Fokuseinstellmittel befindet und mit den Fingern betätigbar ist. Bei der Ausführung nach Fig. 7 sind durch einen oval ausgebildeten Trichter zwei Vertiefungen 49 gebildet.

Durch die Erfindung ist ein kompaktes Teilnehmergerät für Bildfernsprechen realisierbar, das außer nicht wahrnehmbarer Parallaxefehler eine Vielzahl von Möglichkeiten bietet, die insbesondere in Multimediasystemen Anwendung finden können.

## Patentansprüche

1. Teilnehmergerät für Bildfernsprechen mit einer nach hinten geneigten Bildwiedergabevorrichtung und einer benachbarten Videokamera, deren Strahlengänge auf einen Benutzer ausgerichtet sind,
**dadurch gekennzeichnet,** daß lediglich der aus Objektiv (12) und Bildwandler (13) bestehende Aufnahmeteil der Videokamera (11) getrennt von der Kameraelektronik (14) unmittelbar oberhalb der oberen Bildschirmkante (9) oder unmittelbar neben der seitlichen Bildschirmkante (18) der Bildwiedergabevorrichtung (3) und die Kameraelektronik (14) hinter dem Bildschirm (3') angeordnet ist.

2. Teilnehmergerät nach Anspruch 1, dadurch gekennzeichnet, daß die Bildfläche (3'') des Bildschirms (3') zur Horizontalen (H) derart geneigt ist, daß der Abstand zwischen Benutzer (B) und oberer Bildschirmkante (9) der Bildfläche (3'') größer ist als der Abstand zur unteren Bildschirmkante (10) und der Winkel (ε) zwischen der Blickrichtung (4) des Benutzers (B) und der optischen Achse (6) des Bildschirms (3') 5° bis 30°, insbesondere etwa 20° beträgt, daß der Aufnahmeteil der Videokamera (11) derart oberhalb oder seitlich, vorzugsweise im Bereich des oberen Drittels der Bildfläche (3''), neben der Bildschirmbegrenzung angeordnet ist, daß die optische Achse (16) des Objektivs (12) mit der Blickrichtung (4) bei einem Betrachtungsabstand von etwa 50 bis 70 cm, insbesondere etwa 60 cm, bei Anordnung über der oberen Bildschirmkante (9) einen Winkel (φ) von maximal 6° und bei Anordnung neben der seitlichen Bildschirmkante (18) einen Winkel (φ') von maximal 8° einschließt.

3. Teilnehmergerät nach Anspruch 2, dadurch gekennzeichnet, daß über dem Aufnahmeteil der Videokamera (11) eine dachförmige Blende (19) vorgesehen ist, deren Neigung und/oder Überstand einstellbar ist.

4. Teilnehmergerät nach Anspruch 2, dadurch gekennzeichnet, daß das Gehäuse (2) an der Frontseite (22) unterhalb des Bildschirms (3') wenigstens eine Schallöffnung (23) aufweist, hinter der ein Lautsprecher (24) angeordnet ist, daß im Gehäuse (2) im Bereich des Lautsprechers (24) ein zur Schallöffnung (23) hin offenes Gehäuseteil (25) angeformt oder anbringbar ist, das gegenüber dem Gehäuse (2) eine abgeschlossene Lautsprecherbox (26) bildet, und daß in der oberhalb des Bildschirms (3') vorhandenen Gehäusewand (22) wenigstens eine Schallöffnung (37) für ein dahinter angeordnetes Mikrofon (38) vorgesehen ist, die diagonal zu der Schallöffnung (23) für den Lautsprecher (24) und mechanisch entkoppelt angeordnet ist.

5. Teilnehmergerät nach Anspruch 4, dadurch gekennzeichnet, daß zwischen dem den Bildschirm (3') umgebenden oberen Gehäuseteil (39) und dem den Lautsprecher (24) umgebenden unteren Gehäuseteil (40) wenigstens ein Scharnier (41) oder Gelenk vorgesehen ist, und daß der obere gegenüber dem unteren Gehäuseteil (39; 40) derart verstellbar ist, daß der Neigungswinkel (δ) der optischen Achse (6) des Bildschirms (3') gegenüber der Horizontalen (H) veränderbar ist und/oder oberer Gehäuseteil (39) und unterer Gehäuseteil (40) zusammenklappbar sind.

6. Teilnehmergerät nach Anspruch 5, dadurch gekennzeichnet, daß es aus zwei über Befestigungsmittel und/oder Steckverbindungen elektrisch und mechanisch miteinander verbundenen bzw. verbindbaren Moduleinheiten (47, 48) besteht, wobei die erste Moduleinheit (47) zumindest Bildschirm (3'), Videokamera (11), Kameraelektronik (14), Lautsprecher (24), Mikrofon (38) und Empfänger (46) für Fernsteuerung des Teilnehmergerätes (1) umfaßt und die zweite Moduleinheit (48) der ersten Moduleinheit (47) zugeordnete und ggf. auch separat funktionsfähige Einrichtungen zur Telekommunikation, wie Handapparatablage (42) mit Handapparat (43), Wähltastatur (44), Funktionstastatur, Netzteil (45), Lüfter etc. umfaßt und die zweite Moduleinheit (48) gegen gleiche oder andere Moduleinheiten austauschbar ist.

7. Teilnehmergerät für Bildfernsprechen mit einer nach hinten geneigten Bildwiedergabevorrichtung und einer benachbarten Videokamera, deren Strahlengänge auf einen Benutzer ausgerichtet sind,
**dadurch gekennzeichnet,** daß die Videokamera (11) unmittelbar über dem Bildschirm (3') angeordnet ist und ein Portraitobjektiv mit einer Brennweite f = 12 mm und die Bildwiedergabevorrichtung (3) einen 14-Zoll-Bildschirm hat, daß bei einer Distanz (a) vom Benutzer (B) zur Videokamera (11) von 115 cm der Winkel (β) zwischen der Horizontalen (H) und der Blickkontaktlinie (4) eines Benutzers (B) zu einem Gesprächspartner (P) auf dem Bildschirm (3') etwa 10°, der Winkel (γ) zwischen dieser Blickkontaktlinie (4) und der Blicklinie (5) zur Videokamera (11) etwa 5,5° beträgt, und deren optische Achse (16) um einen Neigungswinkel (α) von ± 5° über bzw. unter der Horizontalen (H) einstellbar ist.

8. Teilnehmergerät für Bildfernsprechen mit einer nach hinten geneigten Bildwiedergabevorrichtung und einer benachbarten Videokamera, deren Strahlengänge auf einen Benutzer ausgerichtet sind,
**dadurch gekennzeichnet,** daß die Videokamera (11) unmittelbar über dem Bildschirm (3') angeordnet ist und ein Weitwinkelobjektiv mit einer Brennweite f = 6 mm und die Bildwiedergabevorrichtung (3) einen 14-Zoll-Bildschirm hat, daß bei einer Distanz (a) vom Benutzer (B) zur Videokamera (11) von 85 cm der Winkel (β) zwischen der Horizontalen (H) und der Blickkontaktlinie (4) eines Benutzers (B) zu einem Gesprächspartner (P) auf dem Bildschirm (3') etwa 10°, der Winkel (γ) zwischen dieser Blickkontaktlinie (4) und der Blicklinie (5) zur Videokamera (11) etwa 5,5° beträgt, und deren optische Achse (16) um einen Neigungswinkel (α) von 0° bis 10° unter der Horizontalen (H) einstellbar ist.

9. Teilnehmergerät für Bildfernsprechen mit einer nach hinten geneigten Bildwiedergabevorrichtung und einer benachbarten Videokamera, deren Strahlengänge auf einen Benutzer ausgerichtet sind,
**dadurch gekennzeichnet,** daß die Videokamera (11) unmittelbar über dem Bildschirm (3') angeordnet ist und ein Weitwinkelobjektiv mit einer Brennweite f = 6 mm und die Bildwiedergabevorrichtung (3) einen 5,7-Zoll-Bildschirm hat, daß bei einer Distanz (a) vom Benutzer (B) zur Videokamera (11) von 55 bis 85 cm der Winkel (β) zwischen der Horizontalen (H) und der Blickkontaktlinie (4) eines Benutzers (B) zu einem Gesprächspartner (P) auf dem Bildschirm (3') 18° bis 10°, der Winkel (γ) zwischen dieser Blickkontaktlinie (4) und der Blicklinie (5) zur Videokamera (11) 5° bis 3° beträgt, und deren optische Achse (16) um einen Neigungswinkel (α) von ± 5° über bzw. unter der Horizontalen (H) einstellbar ist.

10. Teilnehmergerät für Bildfernsprechen mit einer nach hinten geneigten Bildwiedergabevorrichtung und einer benachbarten Videokamera, deren Strahlengänge auf einen Benutzer ausgerichtet sind,
**dadurch gekennzeichnet,** daß die Videokamera (11) unmittelbar über dem Bildschirm (3') angeordnet ist und ein Normalobjektiv mit einer Brennweite f = 8,5 mm und die Bildwiedergabevorrichtung (3) einen 10-Zoll-Bildschirm hat, daß bei einer Distanz (a) vom Benutzer (B) zur Videokamera (11) von 70 bis 100 cm der Winkel (β) zwischen der Horizontalen (H) und der Blickkontaktlinie (4) eines Benutzers (B) zu einem Gesprächspartner (P) auf dem Bildschirm (3') 18° bis 10°, der Winkel (γ) zwischen dieser Blickkontaktlinie (4) und der Blicklinie (5) zur Videokamera (11) 5° bis 3° beträgt, und deren optische Achse (16) um einen Neigungswinkel (α) von ± 8° über bzw. unter der Horizontalen (H) einstellbar ist.
